# EUROPEAN PATENT APPLICATION

(11) **EP 3 421 297 A1**
(43) Date of publication of application: **02.01.2019**
(21) Application number: 17773624.6
(22) Date of filing: 01.02.2017
(51) Int. Cl.: B60R 11/02, H04N 5/64

(54) **ON-VEHICLE DEVICE AND DISPLAY ATTACHMENT DEVICE**

(30) Priority: 28.03.2016 JP 2016063661
(71) Applicant: Panasonic Intellectual Property Management Co., Ltd., Osaka-shi, Osaka 540-6207 (JP)
(72) Inventor: YAMAZAKI Kei, Osaka-shi, Osaka 540-6207 (JP); MAGOORI Hiroshi, Osaka-shi, Osaka 540-6207 (JP); HOKIMOTO Yukinori, Osaka-shi, Osaka 540-6207 (JP)
(74) Representative: Eisenführ Speiser
(86) International application number: PCT/JP2017/003526
(87) International publication number: WO 2017/169075

(57) **Abstract**

An on-vehicle device includes a main body and a display. The display is detachable from the main body. The main body includes a main-body-side electrical connector, a circuit board, a switch, and a blind cover. The main-body-side electrical connector is formed to project from a front surface of the main body, and is detachable from a display-side electrical connector. The circuit board supports the main-body-side electrical connector. The switch is formed on the circuit board and switches the main-body-side electrical connector between an energizing state and a de-energizing state. The blind cover is attached to a connection part of the main-body-side electrical connector and the display-side electrical connector to cover the connection part. The blind cover has a projection configured to press the switch to switch the main-body-side electrical connector from the de-energizing state to the energizing state when the blind cover is attached to the connection part to cover the connection part.

## Description

### TECHNICAL FIELD

The present disclosure relates to an on-vehicle device to be mounted to a vehicle. More specifically, the present disclosure relates to an on-vehicle device including a main body and a display whose screen is larger in size than a front face of the main body.

### BACKGROUND ART

There have been conventionally proposed on-vehicle devices including a main body and a display whose screen is larger in size than a front face of the main body. For example, PTL 1 discloses an information reproduction apparatus for a vehicle. The information reproduction apparatus includes a main body embedded in a double DIN size-compatible box of a console in a vehicle. The information reproduction apparatus also includes an image display device measuring 7 inches or more diagonally, the image display device being detachable from the main body. This configuration brings about improvement in the degree of freedom as to the size and shape of an information reproduction apparatus.

### Citation List

### Patent Literature

PTL 1: Unexamined Japanese Patent Publication No. 2005-119491

### SUMMARY OF THE INVENTION

The present disclosure provides an on-vehicle device including a main body and a display. The main body is housed in a storage box of a console panel in a vehicle. The display is detachable from the main body. The display includes a display-side electrical connector having a plurality of connection terminals. The main body includes a main-body-side electrical connector, a circuit board, a switch, and a blind cover. The main-body-side electrical connector is formed to project from a front surface of the main body, and is detachable from the display-side electrical connector. The circuit board supports the main-body-side electrical connector. The switch is formed on the circuit board and switches the main-body-side electrical connector between an energizing state and a de-energizing state. The blind cover is attached to a connection part connecting the main-body-side electrical connector with the display-side electrical connector to cover the connection part. The blind cover has a projection configured to press the switch to switch the main-body-side electrical connector from the de-energizing state to the energizing state when the blind cover is attached to the connection part to cover the connection part.

The present disclosure improves safety when the display is attached to the main body of the on-vehicle device.

### BRIEF DESCRIPTION OF DRAWINGS

FIG. 1 is a perspective view of an on-vehicle device according to an exemplary embodiment, the on-vehicle device being mounted to a vehicle.
FIG. 2 is a side view of the on-vehicle device according to the exemplary embodiment.
FIG. 3 is a rear view of a display and a display cover according to the exemplary embodiment.
FIG. 4 is an explanatory diagram illustrating an internal structure of the display cover according to the exemplary embodiment.
FIG. 5 is a sectional side view of a lock mechanism according to the exemplary embodiment, the lock mechanism locking the display.
FIG. 6 is a sectional side view of the lock mechanism according to the exemplary embodiment, the lock mechanism unlocking the display.
FIG. 7 is an explanatory diagram of the display according to the exemplary embodiment, the display being allowed to slide upward.
FIG. 8 is an explanatory diagram of the display according to the exemplary embodiment, the display being allowed to slide downward.
FIG. 9 is an explanatory diagram illustrating how the display according to the exemplary embodiment tilts.
FIG. 10 is an explanatory diagram illustrating how the display according to the exemplary embodiment tilts.
FIG. 11 is a perspective view of a connection part according to the exemplary embodiment as viewed from below.
FIG. 12 is an exploded perspective view of the connection part according to the exemplary embodiment as viewed from below.
FIG. 13 is an explanatory diagram illustrating how the display according to the exemplary embodiment slides backward.
FIG. 14 is an explanatory diagram illustrating how the display according to the exemplary embodiment slides forward.
FIG. 15 is an exploded perspective view of the connection part according to the exemplary embodiment as viewed from above on a side of the display.
FIG. 16 is an exploded perspective view of the connection part according to the exemplary embodiment as viewed from above on a side of the main body.
FIG. 17 is a plan view of the on-vehicle device according to the exemplary embodiment, the on-vehicle device being mounted to a vehicle.
FIG. 18 is an exploded cross-sectional view of the connection part of the on-vehicle device shown in FIG. 17, taken along line XIX-XIX.
FIG. 19 is a cross-sectional view of the connection part of the on-vehicle device shown in FIG. 17, taken along line XIX-XIX.
FIG. 20 is a cross-sectional view of the connection part of the on-vehicle device shown in FIG. 17, taken along a plane parallel to a drawing of FIG. 17.
FIG. 21 is an enlarged view of area B surrounded by an alternate long and short dash line shown in FIG. 20.

### DESCRIPTION OF EMBODIMENT

Prior to describing an exemplary embodiment of the present disclosure, problems found in a conventional technique will now be briefly described herein. In the on-vehicle device disclosed in PTL 1, a detachable electrical connection part does not project from a front surface of a main body of a reproduction apparatus. Consequently, when an image display device is attached to the main body of the reproduction apparatus, it is impossible to visually check a connection state of the electrical connection part. If the on-vehicle device is used with the electrical connection part being incompletely connected, the electrical connection part may be disconnected by vehicle vibration or the like.

On the other hand, if the electrical connection part is formed to project from the front surface of the main body, when the image display device is attached to the main body of the reproduction apparatus, it is possible to visually check the connection state of the electrical connection part. However, a user may touch the electrical connection part by hand and get electrical shock. In addition, if large vibration is generated in a vehicle, a large load may be applied to the electrical connection part, thus leading to disconnection.

The present disclosure has been made in light of such a situation. The present disclosure provides an on-vehicle device with improved safety when a display is attached to a main body of the on-vehicle device.

With reference to the drawings, a description will be given of an on-vehicle device according to an exemplary embodiment of the present disclosure. The present exemplary embodiment shows an on-vehicle device mounted to an automobile to function as, for example, a video player, a music player, and a navigation system.

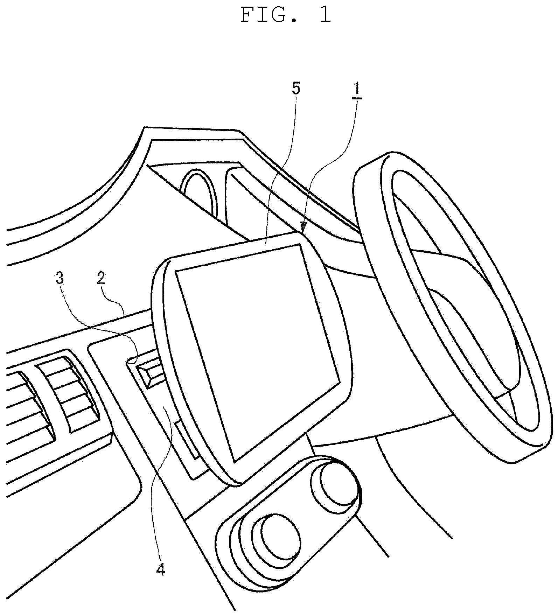

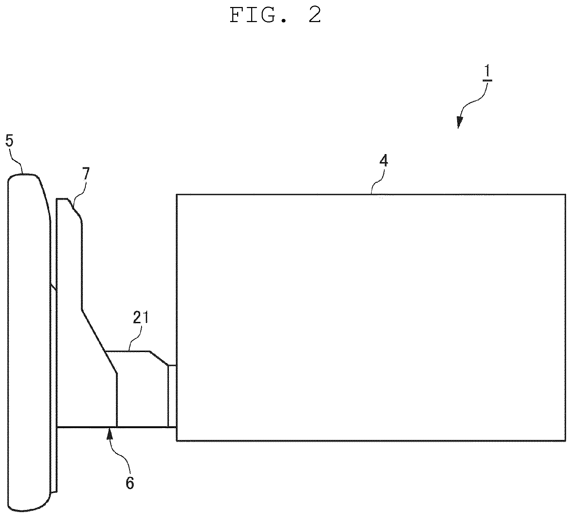

With reference to the drawings, a description will be given of a configuration of the on-vehicle device according to the exemplary embodiment of the present disclosure. FIG. 1 is a perspective view of the on-vehicle device according to the present exemplary embodiment. FIG. 2 is a side view of the on-vehicle device according to the present exemplary embodiment. As illustrated in FIG. 1, on-vehicle device 1 is attached to storage box 3 of console panel 2 in a vehicle. Storage box 3 is configured to house, for example, a double DIN-sized device. As illustrated in FIG. 2, on-vehicle device 1 includes main body 4 and display 5 detachable from main body 4. Main body 4 is housed in storage box 3 of console panel 2. Display 5 includes a screen larger in size than a front face (double DIN size) of main body 4. Display 5 includes, for example, a 9-inch diagonal screen.

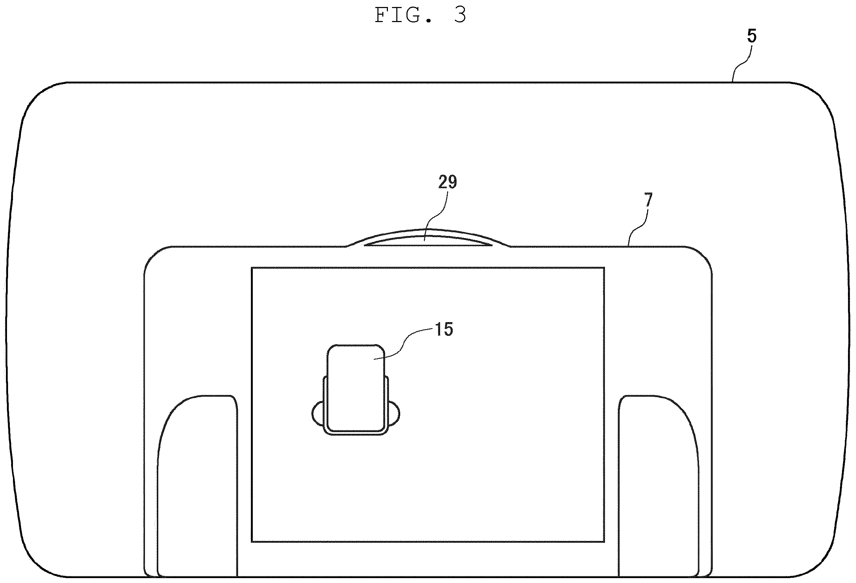

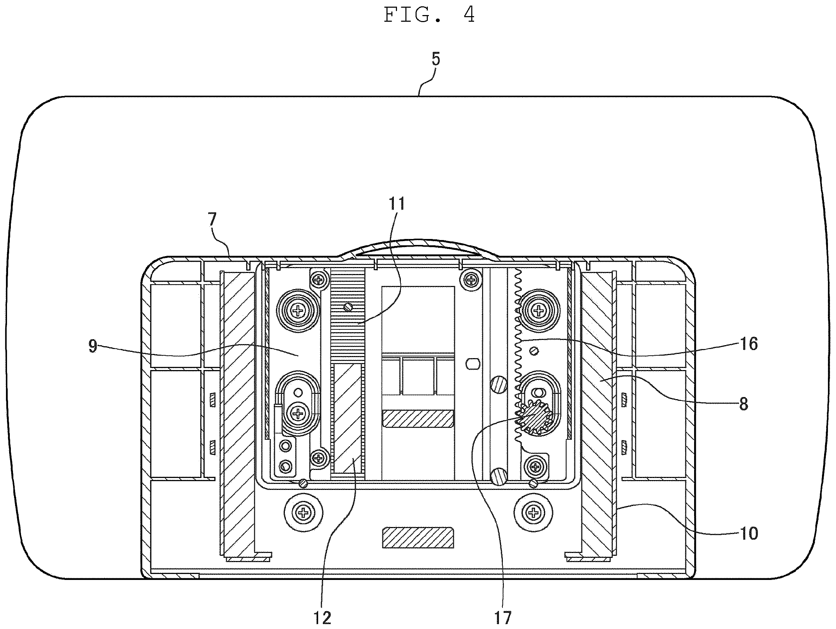

Display cover 7 is attached to a rear face of display 5. Display cover 7 includes a vertical slide mechanism configured to cause display 5 to slide vertical of the screen. FIG. 3 is a rear view of display 5 and display cover 7. FIG. 4 is an explanatory diagram illustrating an internal structure of display cover 7. As illustrated in FIGS. 3 and 4, display cover 7 includes vertical slide base 8 and vertical slide member 9. Vertical slide base 8 includes a pair of vertical slide rails 10 extending vertical of the screen. Vertical slide member 9 is slidably attached to vertical slide rails 10. In this case, vertical slide rails 10 respectively hold lateral ends (left and right sides in FIG. 4) of vertical slide member 9. Vertical slide member 9 is fixed to display 5.

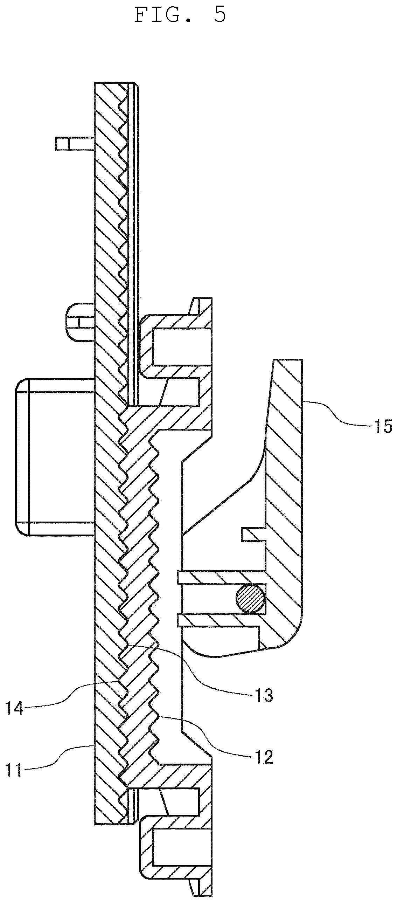

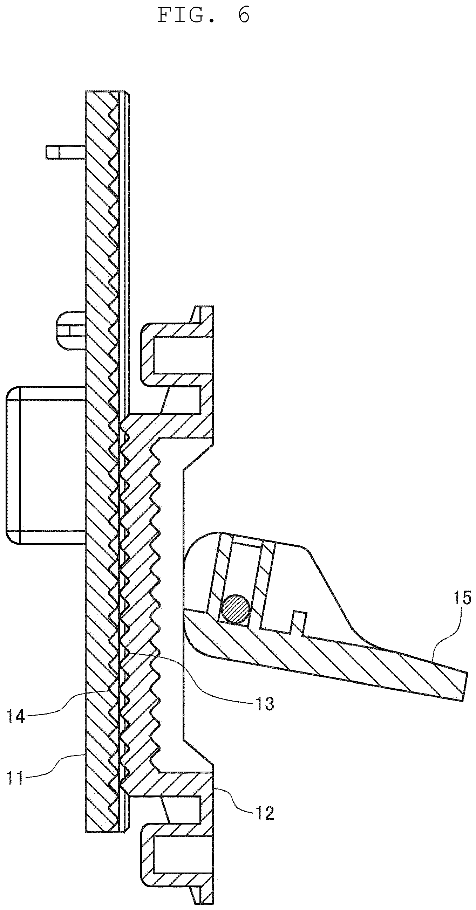

Display cover 7 includes a lock mechanism configured to lock display 5. FIGS. 5 and 6 are sectional side views of the lock mechanism. As illustrated in FIG. 4, vertical slide member 9 includes rack base 11, and vertical slide base 8 includes rack gear 12. As illustrated in FIGS. 5 and 6, rack base 11 has first engagement part 13, and rack gear 12 has second engagement part 14.

As illustrated in FIG. 5, rack gear 12 is pressed against rack base 11 in such a manner that knob 15 is turned and raised counterclockwise as illustrated in FIG. 5. When rack gear 12 is pressed against rack base 11, second engagement part 14 engages with first engagement part 13. This engagement locks vertical slide member 9 that slides relative to vertical slide base 8. Display 5 is thus locked.

On the other hand, as illustrated in FIG. 6, rack gear 12 is separated from rack base 11 in such a manner that knob 15 is turned and tilted clockwise as illustrated in FIG. 6. When rack gear 12 is separated from rack base 11, second engagement part 14 disengages from first engagement part 13. This disengagement unlocks vertical slide member 9 that slides relative to vertical slide base 8. Display 5 is thus unlocked.

As illustrated in FIG. 4, vertical slide member 9 also includes engaged gear 16 extending vertical of the screen, and vertical slide base 8 also includes damper gear 17 configured to engage with engaged gear 16. In this case, rack base 11 and rack gear 12 are disposed near a first lateral end (left side in FIG. 4) of the screen of display 5. On the other hand, engaged gear 16 and damper gear 17 are disposed near a second lateral end (right side in FIG. 4) of the screen of display 5.

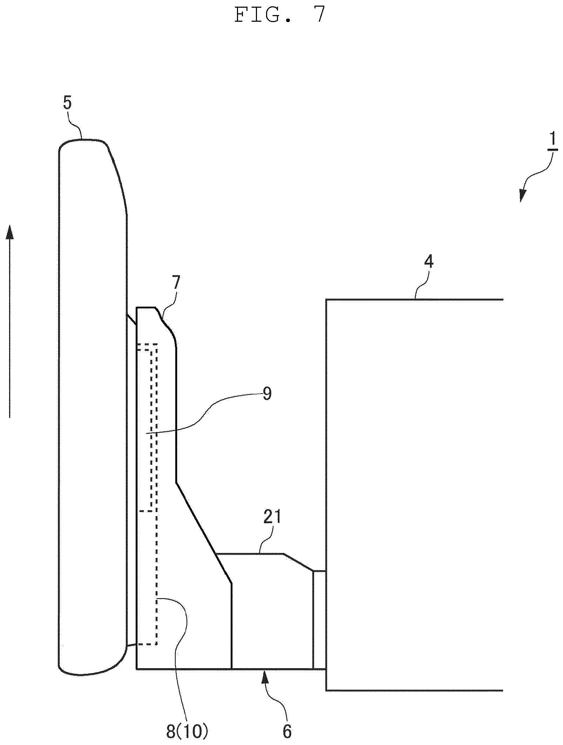

In order to cause display 5 to slide upward, a user tilts knob 15 to unlock display 5, and then pushes display 5 upward by hand. Vertical slide member 9 thus slides upward relative to vertical slide rails 10, so that display 5 slides upward as illustrated in FIG. 7. At this time, display 5 slides upward slowly by an action of damper gear 17. When display 5 finishes sliding, the user raises knob 15 to lock display 5.

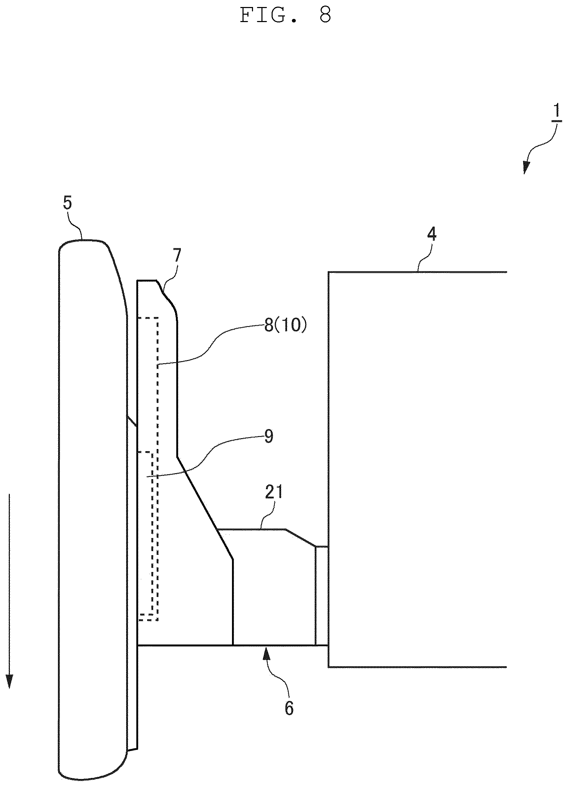

In order to cause display 5 to slide downward, the user tilts knob 15 to unlock display 5, and then pulls display 5 downward by hand. Vertical slide member 9 thus slides downward relative to vertical slide rails 10, so that display 5 slides downward as illustrated in FIG. 8. At this time, display 5 slides downward slowly by the action of damper gear 17. When display 5 finishes sliding, the user raises knob 15 to lock display 5.

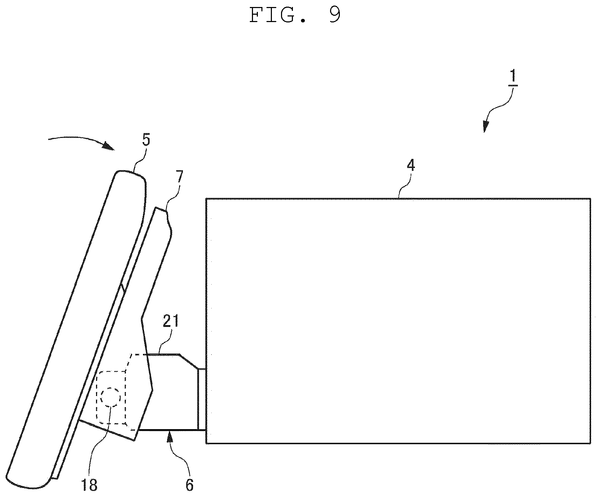

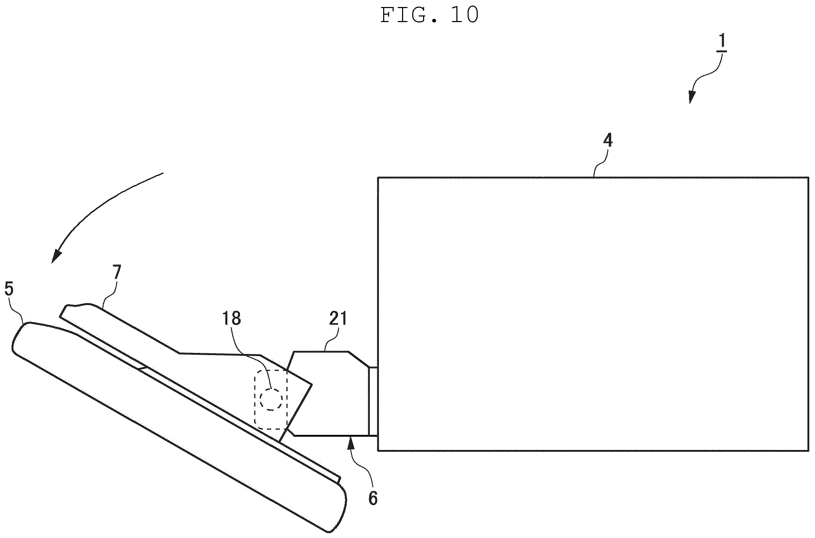

Display cover 7 also includes a tilt mechanism configured to tilt display 5. FIGS. 9 and 10 are explanatory diagrams illustrating how display 5 tilts. As illustrated in FIGS. 9 and 10, display cover 7 includes hinge 18. Display 5 turns about hinge 18 to tilt.

In order to tilt display 5 clockwise as illustrated in FIG. 9 such that display 5 faces upward, the user directs display 5 upward by hand. Display 5 thus turns about hinge 18 to tilt upward as illustrated in FIG. 9. In order to tilt display 5 counterclockwise as illustrated in FIG. 10 such that display 5 faces downward, the user directs display 5 downward by hand. Display 5 thus turns about hinge 18 to tilt downward as illustrated in FIG. 10.

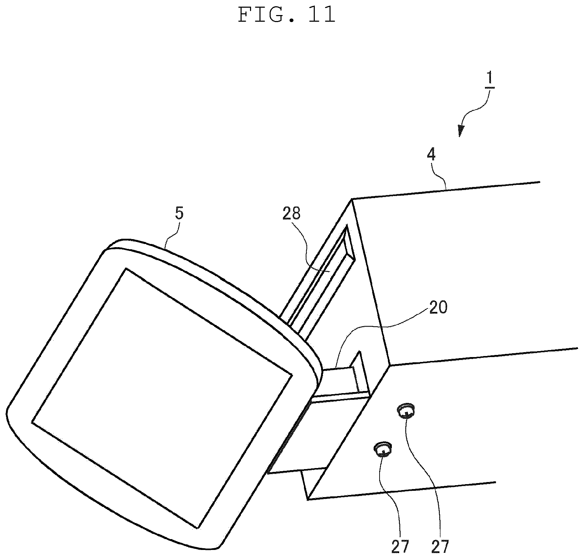

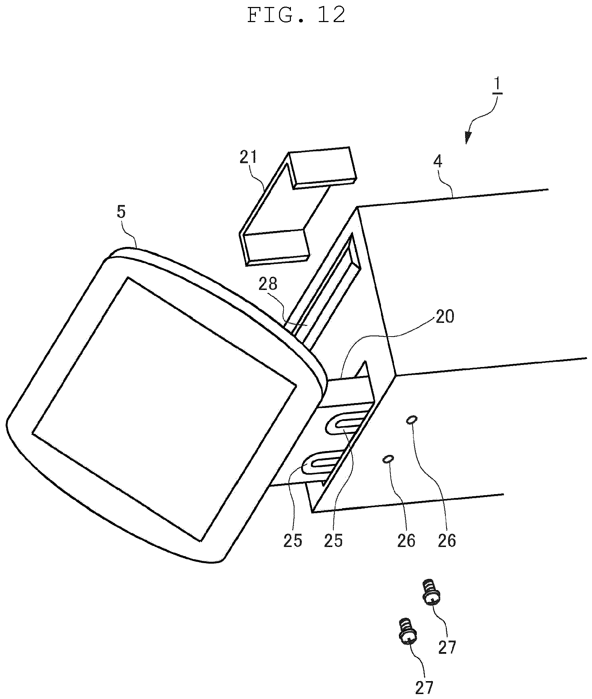

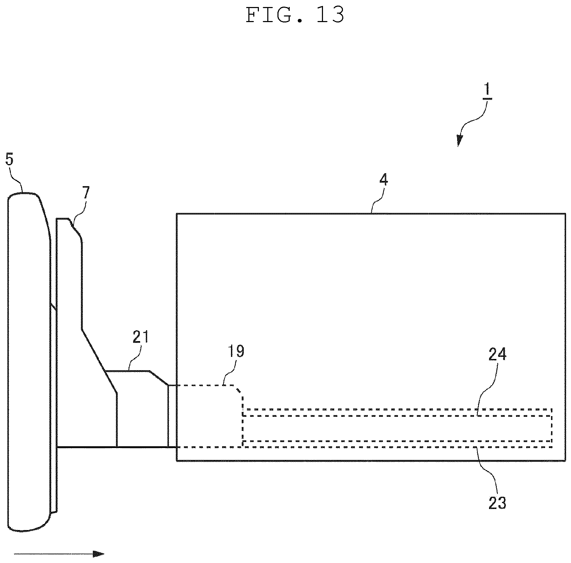

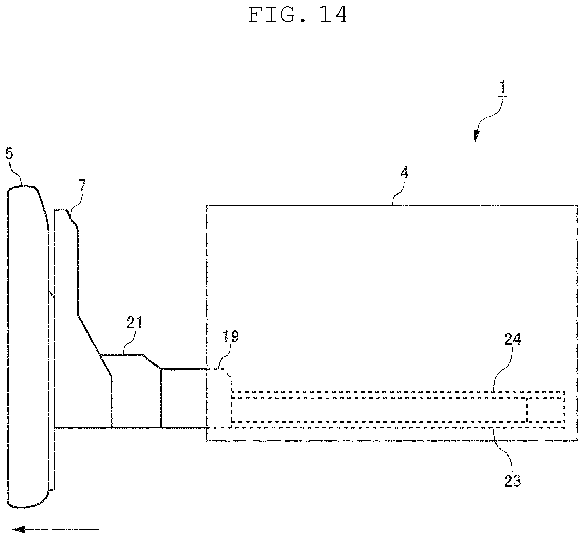

Meanwhile, main body 4 also includes a depthwise slide mechanism configured to cause display 5 to slide depthwise of main body 4. FIG. 11 is a perspective view of connection part 6 of display 5 and main body 4 as viewed from below. FIG. 12 is an exploded perspective view of connection part 6 as viewed from below. FIGS. 13 and 14 are explanatory diagrams illustrating how display 5 slides backward and forward.

As illustrated in FIGS. 11 to 14, main body 4 includes depthwise slide member 19 connected to display cover 7. Depthwise slide member 19 is mostly housed in main body 4, except for a part projecting outside of main body 4. The part projecting outside of main body 4 is referred to as neck 20. Blind cover 21 is attached to neck 20 from above.

As illustrated in FIGS. 13 and 14, depthwise slide base 23 is housed in main body 4 at a position near a bottom of main body 4. Depthwise slide base 23 includes a pair of depthwise slide rails 24 extending depthwise (laterally in FIGS. 13 and 14) of main body 4. Depthwise slide member 19 is slidably attached to depthwise slide rails 24. In this case, depthwise slide rails 24 respectively hold lateral ends (front and rear sides in FIGS. 13 and 14) of depthwise slide member 19.

Neck 20 has, in its lower face, a pair of screw-receiving grooves 25 extending depthwise (laterally in FIGS. 13 and 14) of main body 4, screw-receiving grooves 25 being formed side by side. Screw-receiving grooves 25 receive fixing screws 27 inserted thereinto through screw holes 26 formed in main body 4. Display 5 is thus fixed so as not to slide depthwise of main body 4.

In order to cause display 5 to slide backward (rearward, i.e., rightward in FIG. 13), the user loosens fixing screws 27 to unlock display 5, and then pushes display 5 rearward by hand. Longitudinal slide member 19 thus slides backward relative to longitudinal slide rails 24, so that display 5 slides backward as illustrated in FIG. 13. When display 5 finishes sliding, the user tightens up fixing screws 27 to lock display 5.

In order to cause display 5 to slide forward (frontward, i.e., leftward in FIG. 14), the user loosens fixing screws 27 to unlock display 5, and then pulls display 5 frontward by hand. Depthwise slide member 19 thus slides forward relative to depthwise slide rails 24, so that display 5 slides forward as illustrated in FIG. 14. When display 5 finishes sliding, the user tightens up fixing screws 27 to lock display 5.

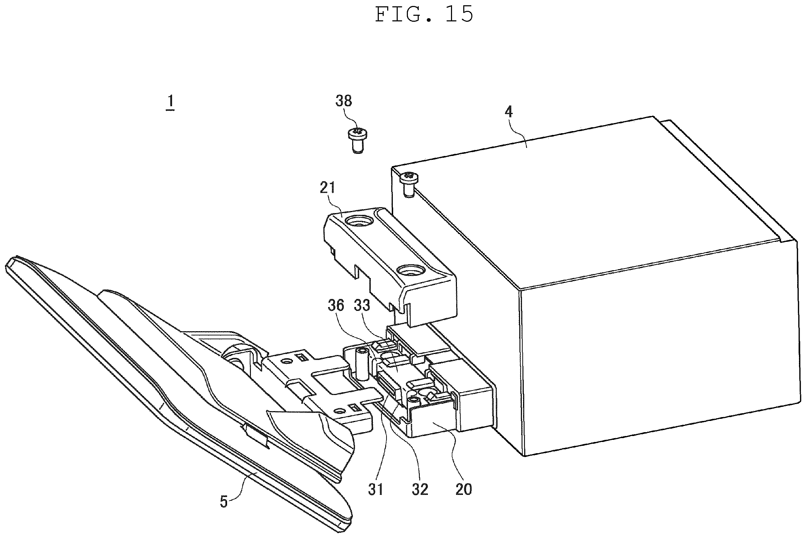

Next, a configuration of connection part 6 of main body 4 and display 5 is described in detail with reference to FIGS. 15 to 21.

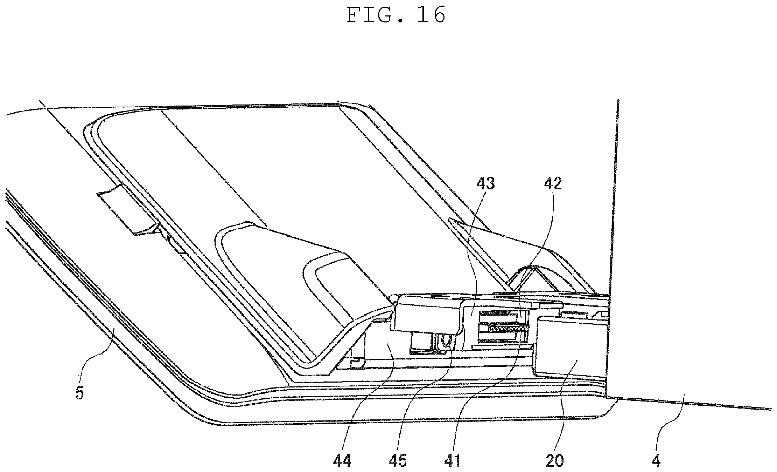

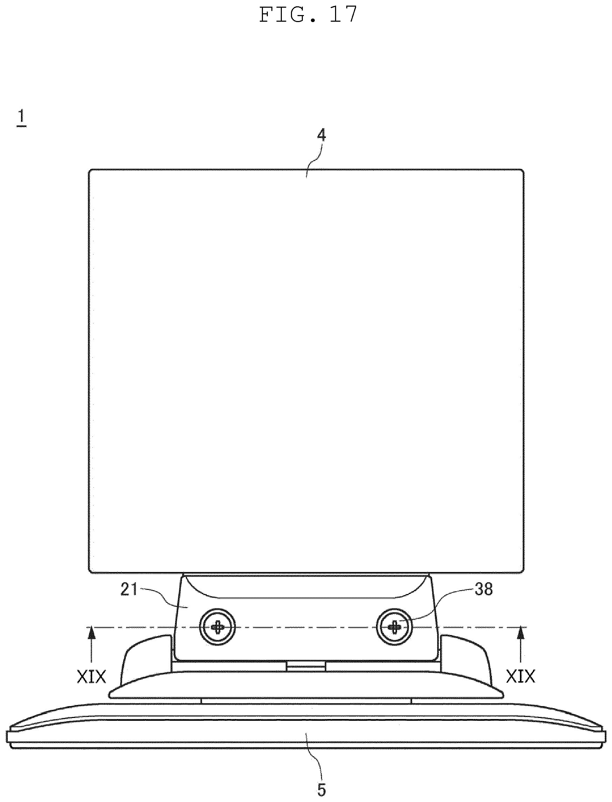

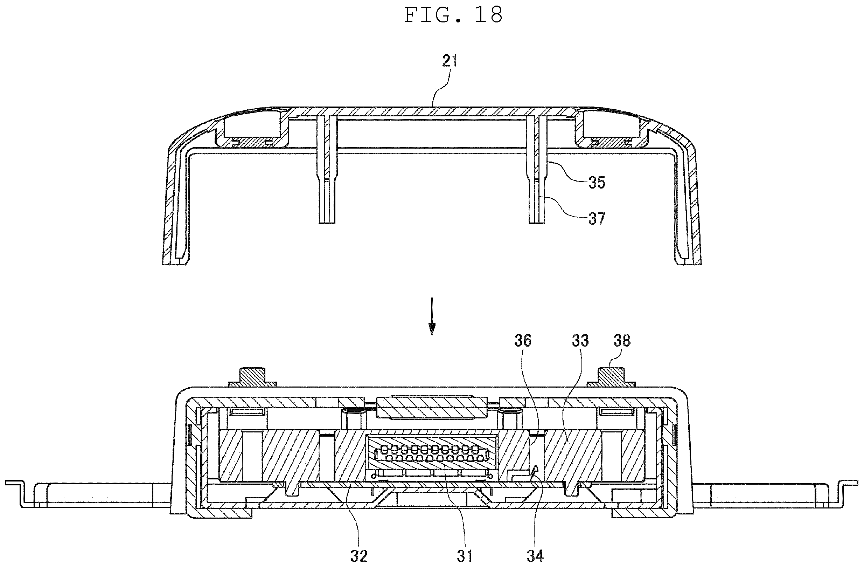

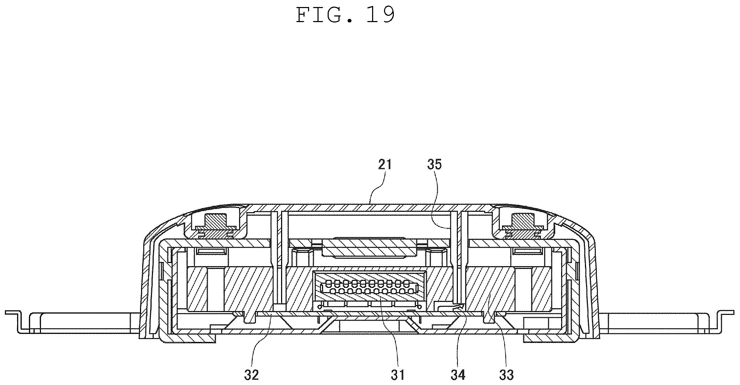

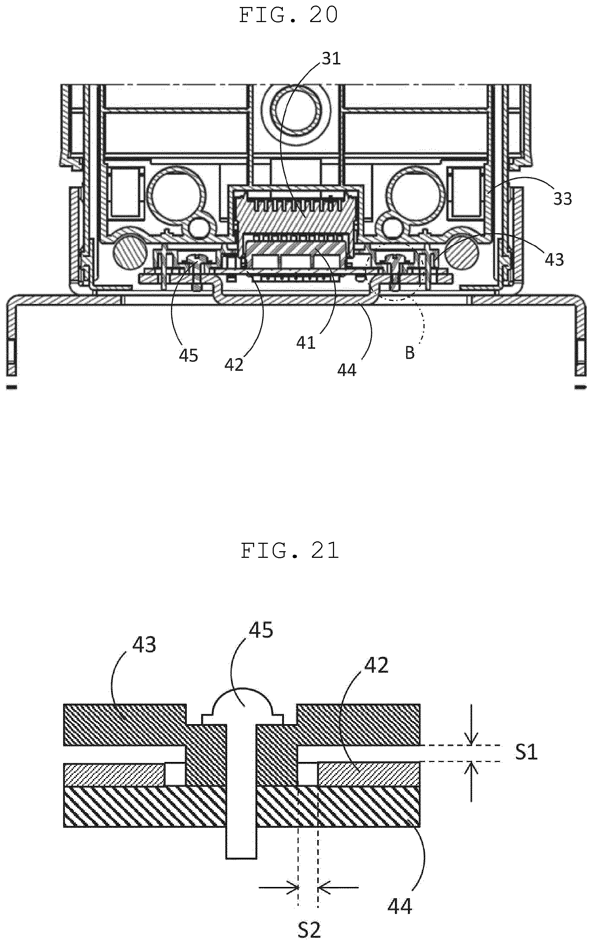

FIG. 15 is an exploded perspective view of connection part 6 as viewed from above on a side of display 5. FIG. 16 is an exploded perspective view of connection part 6 as viewed from above on a side of main body 4. FIG. 17 is a plan view of on-vehicle device 1, on-vehicle device 1 being mounted to a vehicle. FIG. 18 is an exploded cross-sectional view of connection part 6 of on-vehicle device 1 shown in FIG. 17, taken along line XIX-XIX. FIG. 19 is a cross-sectional view of connection part 6 of on-vehicle device 1 shown in FIG. 17, taken along line XIX-XIX. FIG. 20 is a cross-sectional view of the connection part of the on-vehicle device shown in FIG. 17, taken along a plane parallel to a drawing of FIG. 17. FIG. 21 is an enlarged view of area B surrounded by an alternate long and short dash line shown in FIG. 20.

As illustrated in FIGS. 16 and 20, display 5 includes display-side electrical connector 41 having a plurality of connection terminals, display-side circuit board 42 supporting display-side electrical connector 41, display-side circuit board cover 43 covering display-side circuit board 42, display-side circuit board cover 43 being composed of a resin, metal plate 44 disposed to be opposite to display-side circuit board cover 43 with display-side circuit board 42 being therebetween, and screws 45 fixing display-side circuit board cover 43 to metal plate 44.

For example, commercially available floating connectors are used for display-side electrical connector 41. The connection terminals included in display-side electrical connector 41 include both power source connection terminals and signal connection terminals.

As illustrated in FIG. 21, a through-hole is formed in display-side circuit board 42. Display-side circuit board cover 43 includes a projection to be inserted into the through-hole formed in display-side circuit board 42. In a state where a distal end of the projection of display-side circuit board cover 43 abuts against metal plate 44, screw 45 is then inserted so as to pass through the projection and metal plate 44.

In an example illustrated, a height of the projection of display-side circuit board cover 43 is larger than a thickness of display-side circuit board 42. For this reason, in a state where display-side circuit board cover 43 is fixed to metal plate 44 by screws, gap S1 is formed between display-side circuit board 42 and display-side circuit board cover 43 in an axial direction of screw 45.

In the example illustrated, an outer diameter of the projection of display-side circuit board cover 43 is smaller than an inner diameter of the through-hole in display-side circuit board 42. For this reason, in the state where display-side circuit board cover 43 is fixed to metal plate 44 by screws, gap S2 is formed between display-side circuit board 42 and display-side circuit board cover 43 in a direction vertical to the axial direction of screw 45, which is a surface direction of display-side circuit board 42.

As illustrated in FIGS. 15 and 17 to 19, main body 4 includes main-body-side electrical connector 31 detachable from display-side electrical connector 41, circuit board 32 supporting main-body-side electrical connector 31, circuit board cover 33 covering circuit board 32, and switch 34 on circuit board 32, switching main-body-side electrical connector 31 between an energizing state and a de-energizing state.

Main-body-side electrical connector 31 is formed to project from a front surface of main body 4 and in an example illustrated, is formed in neck 20 described above. Main-body-side electrical connector 31 is formed to project from the front surface of main body 4. Consequently, when display-side electrical connector 41 is connected to main-body-side electrical connector 31, a user can visually check a connection state easily. It is thus possible to prevent on-vehicle device 1 from being used in an incomplete connection state.

Switch 34 is, for example, a lever switch and has a lever extending obliquely upward relative to circuit board 32. When the lever of switch 34 is pressed downward toward circuit board 32, main-body-side electrical connector 31 starts energizing, and electricity is supplied from main-body-side electrical connector 31 to display-side electrical connector 41. When pressing downward the lever of switch 34 stops, the lever returns to its original angle by restoring force of the lever itself, energizing main-body-side electrical connector 31 stops, and thus supply of electricity from main-body-side electrical connector 31 to display-side electrical connector 41 stops.

Blind cover 21 described above is attached to a connection part connecting main-body-side electrical connector 31 with display-side electrical connector 41 to cover the connection part, and is fixed by screws 38.

As illustrated in FIGS. 18 and 19, blind cover 21 includes boss 35, which is a projection. When blind cover 21 is attached to the connection part to cover the connection part, boss 35 presses switch 34 to switch main-body-side electrical connector 31 to the energizing state.

Boss 35 is formed to extend downward from inside of blind cover 21. In the present exemplary embodiment, boss 35 has rib 37 axially extending, that is, extending in a projecting direction. In an example illustrated, four ribs 37 are formed at 90° and boss 35 has a cross-shaped cross-section. Boss 35 has ribs 37, and thus strength of boss 35 is enhanced. Consequently, it is possible to prevent boss 35 from accidentally hitting circuit board cover 33 or the like and from being broken at a time of attachment of blind cover 21.

In the present exemplary embodiment, when display-side electrical connector 41 is connected to main-body-side electrical connector 31 and then blind cover 21 is attached to a connection part to cover the connection part, boss 35 of blind cover 21 presses switch 34 to switch main-body-side electrically connector 31 to the energizing state. For this reason, when main-body-side electrical connector 31 is connected to display-side electrical connector 41, electricity has not been supplied to main-body-side electrical connector 31, and thus if a user accidentally touches main-body-side electrical connector 31 by hand, the user does not get electric shock. Consequently, the user can extremely safely perform an operation of attaching display 5 to main body 4.

As illustrated in FIGS. 18 and 19, circuit board cover 33 has cylindrical guide 36 that guides boss 35. A cross-sectional shape of guide 36 is not particularly limited, and may be a circular shape or a partially cut-away arc shape. Switch 34 on circuit board 32 is positioned at a distal end of guide 36. For this reason, when blind cover 21 is attached to the connection part to cover the connection part, boss 35 of blind cover 21 is guided to switch 34 by guide 36 of circuit board cover 33. It is thus possible to prevent a state where boss 35 is pressed out of switch 34 and main-body-side electrical connector 31 is not switched to the energizing state.

As illustrated in FIG. 21, gap S1 is formed between display-side circuit board 42 and display-side circuit board cover 43 in the axial direction of screw 45, that is, vertical of screw 45 in FIG. 21. Consequently, if large vibration is generated in a vehicle, display-side circuit board 42 can move with display-side electrical connector 41 relative to display-side circuit board cover 43 within a range of gap S1 in the axial direction of screw 45. A load applied to display-side electrical connector 41 and main-body-side electrical connector 31 connected to display-side electrical connector 41 is thus relieved, and it is possible to prevent disconnection at display-side electrical connector 41 and main-body-side electrical connector 31.

As illustrated in FIG. 21, gap S2 is formed between display-side circuit board 42 and display-side circuit board cover 43 in a direction vertical to the axial direction of screw 45, that is, a lateral direction in FIG. 21. Consequently, if large vibration is generated in a vehicle, display-side circuit board 42 can also move with display-side electrical connector 41 relative to display-side circuit board cover 43 within a range of gap S2 in the direction vertical to the axial direction of screw 45. A load applied to display-side electrical connector 41 and main-body-side electrical connector 31 is thus further relieved, and it is possible to more reliably prevent disconnection at display-side electrical connector 41 and main-body-side electrical connector 31.

According to on-vehicle device 1 of the present exemplary embodiment, when display-side electrical connector 41 is connected to main-body-side electrical connector 31 and then blind cover 21 is attached to a connection part to cover the connection part, boss 35 of blind cover 21 presses switch 34 to switch main-body-side electrical connector 31 to an energizing state. For this reason, if a user accidentally touches main-body-side electrical connector 31 by hand when connecting display-side electrical connector 41 to main-body-side electrical connector 31, it is extremely safe because the user does not get electric shock. Main-body-side electrical connector 31 is formed to project from the front surface of main body 4. Consequently, the user can visually check a connection state of main-body-side electrical connector 31 and display-side electrical connector 41, and it is possible to prevent on-vehicle device 1 from being used in an incomplete connection state.

In addition, according to the present exemplary embodiment, gap S1 is formed between display-side circuit board 42 and display-side circuit board cover 43 in the axial direction of screw 45. Consequently, if large vibration is generated in a vehicle, display-side circuit board 42 can move with display-side electrical connector 41 relative to display-side circuit board cover 43 within the range of gap S1 in the axial direction of screw 45. A load applied to display-side electrical connector 41 and main-body-side electrical connector 31 connected to display-side electrical connector 41 is thus relieved, and it is possible to prevent disconnection at display-side electrical connector 41 and main-body-side electrical connector 31.

In addition, according to the present exemplary embodiment, gap S2 is formed between display-side circuit board 42 and display-side circuit board cover 43 in the direction vertical to the axial direction of screw 45. Consequently, if large vibration is generated in a vehicle, display-side circuit board 42 can also move with display-side electrical connector 41 relative to display-side circuit board cover 43 within the range of gap S2 in the direction vertical to the axial direction of screw 45. A load applied to display-side electrical connector 41 and main-body-side electrical connector 31 is thus further relieved, and it is possible to more reliably prevent disconnection at display-side electrical connector 41 and main-body-side electrical connector 31.

Moreover, according to the present exemplary embodiment, switch 34 is positioned at the distal end of guide 36 guiding boss 35. Consequently, when blind cover 21 is attached to a connection part to cover the connection part, boss 35 of blind cover 21 is guided to switch 34 by guide 36 formed in circuit board cover 33. It is thus possible to prevent a state where boss 35 is pressed out of switch 34 and main-body-side electrical connector 31 is not switched to the energizing state.

According to the present exemplary embodiment, boss 35 has axially extending ribs 37, and thus the strength of boss 35 is enhanced and it is possible to prevent boss 35 from being accidentally broken at the time of attachment of blind cover 21.

The exemplary embodiment of the present disclosure has been described by way of illustration. However, the scope of the present disclosure is not limited to the exemplary embodiment, and may be modified and changed in accordance with objects within the scope recited in the claims.

It is to be noted that the exemplary embodiment may be specified by items described below.

### [Item 1]

An on-vehicle device includes a main body configured to be housed in a storage box of a console panel in a vehicle and a display detachable from the main body. The display includes a display-side electrical connector having a plurality of connection terminals. The main body includes a main-body-side electrical connector to be projected from a front surface of the main body, the main-body-side electrical connector being detachable from the display-side electrical connector, a circuit board supporting the main-body-side electrical connector, a switch on the circuit board, configured to switch the main-body-side electrical connector between an energizing state and a de-energizing state, and a blind cover to be attached to a connection part of the main-body-side electrical connector and the display-side electrical connector to cover the connection part. The blind cover has a projection configured to press the switch to switch the main-body-side electrical connector from the de-energizing state to the energizing state when the blind cover is attached to the connection part to cover the connection part.

According to the on-vehicle device of the present disclosure, when the display-side electrical connector is connected to the main-body-side electrical connector and then the blind cover is attached to the connection part to cover the connection part, the projection of the blind cover presses the switch to switch the main-body-side electrical connector to the energizing state. For this reason, if a user accidentally touches the main-body-side electrical connector by hand when connecting the display-side electrical connector to the main-body-side electrical connector, it is extremely safe because the user does not get electric shock. In addition, the main-body-side electrical connector is formed to project from the front surface of the main body. Consequently, the user can visually check a connection state of the main-body-side electrical connector and the display-side electrical connector, and it is possible to prevent the on-vehicle device from being used in an incomplete connection state.

### [Item 2]

The display includes a display-side circuit board supporting the display-side electrical connector, a display-side circuit board cover covering the display-side circuit board, a metal plate disposed to be opposite to the display-side circuit board cover with the display-side circuit board being provided between the metal plate and the display-side circuit board cover, and a screw fixing the display-side circuit board cover to the metal plate. A gap may be formed between the display-side circuit board and the display-side circuit board cover in an axial direction of the screw.

According to such an aspect, if large vibration is generated in a vehicle, the display-side circuit board can move with the display-side electrical connector relative to the display-side circuit board cover in the axial direction of the screw. A load applied to the display-side electrical connector and the main-body-side electrical connector connected to the display-side electrical connector is thus relieved, and it is possible to prevent disconnection at the display-side electrical connector and the main-body-side electrical connector.

### [Item 3]

A gap may be formed between the display-side circuit board and the display-side circuit board cover in a direction vertical to the axial direction.

According to such an aspect, if large vibration is generated in a vehicle, the display-side circuit board can move with the display-side electrical connector relative to the display-side circuit board cover not only in the axial direction of the screw but also in the direction vertical to the axial direction. Consequently, a load applied to the display-side electrical connector and the main-body-side electrical connector is thus further relieved, and it is possible to more reliably prevent disconnection at the display-side electrical connector and the main-body-side electrical connector.

### [Item 4]

The main body includes a circuit board cover covering the circuit board, the circuit board cover has a guide guiding the projection, and the switch is positioned at a distal end of the guide.

According to such an aspect, when the blind cover is attached to the connection part to cover the connection part, the projection of the blind cover is guided to the switch by the guide of the circuit board cover. It is thus possible to prevent a state where the projection is pressed out of the switch and the main-body-side electrical connector is not switched to the energizing state.

### [Item 5]

The projection may have a rib extending in a projecting direction of the projection.

According to such an aspect, strength of the projection is enhanced and it is possible to prevent the projection from being accidentally broken at a time of attachment of the blind cover.

### [Item 6]

A display attachment device from which a display is detachable includes a main body configured to be housed in a storage box of a console panel in a vehicle. The display includes a display-side electrical connector having a plurality of connection terminals. The main body includes a main-body-side electrical connector to be projected from a front surface of the main body, the main-body-side electrical connector being detachable from the display-side electrical connector, a circuit board supporting the main-body-side electrical connector, a switch on the circuit board, configured to switch the main-body-side electrical connector between an energizing state and a de-energizing state, and a blind cover to be attached to a connection part connecting the main-body-side electrical connector with the display-side electrical connector to cover the connection part. The blind cover has a projection configured to press the switch to switch the main-body-side electrical connector from the de-energizing state to the energizing state when the blind cover is attached to the connection part to cover the connection part.

According to the display attachment device of the present disclosure, similarly to the on-vehicle device described above, when the display-side electrical connector is connected to the main-body-side electrical connector and then the blind cover is attached to the connection part to cover the connection part, the projection of the blind cover presses the switch to switch the main-body-side electrical connector to the energizing state. For this reason, if a user accidentally touches the main-body-side electrical connector by hand when connecting the display-side electrical connector to the main-body-side electrical connector, it is extremely safe because the user does not get electric shock. In addition, the main-body-side electrical connector is formed to project from the front surface of the main body. Consequently, the user can visually check the connection state of the main-body-side electrical connector and the display-side electrical connector, and it is possible to prevent the on-vehicle device from being used in an incomplete connection state.

### INDUSTRIAL APPLICABILITY

The present disclosure provides an on-vehicle device with improved safety when a display is attached to a main body of the on-vehicle device. The on-vehicle device is therefore useful as, for example, a video player, a music player, and a navigation system in an automobile.

### REFERENCE MARKS IN THE DRAWINGS

- 1:: on-vehicle device
- 2:: console panel
- 3:: storage box
- 4:: main body
- 5:: display
- 6:: connection part
- 7:: display cover
- 8:: vertical slide base
- 9:: vertical slide member
- 10:: vertical slide rail
- 11:: rack base
- 12:: rack gear
- 13:: first engagement part
- 14:: second engagement part
- 15:: knob
- 16:: engaged gear
- 17:: damper gear
- 18:: hinge
- 19:: depthwise slide member
- 20:: neck
- 21:: blind cover
- 22:: pad member
- 23:: depthwise slide base
- 24:: depthwise slide rail
- 25:: screw-receiving groove
- 26:: screw hole
- 27:: fixing screw
- 28:: insertion slot
- 31:: main-body-side electrical connector
- 32:: circuit board
- 33:: circuit board cover
- 34:: switch
- 35:: boss (projection)
- 36:: guide
- 37:: rib
- 38:: screw
- 41:: display-side electrical connector
- 42:: display-side circuit board
- 43:: display-side circuit board cover
- 44:: metal plate
- 45:: screw

## Claims

1. An on-vehicle device comprising:
a main body configured to be housed in a storage box of a console panel in a vehicle; and
a display detachable from the main body,
wherein
the display includes a display-side electrical connector having a plurality of connection terminals,
the main body includes
a main-body-side electrical connector to be projected from a front surface of the main body, the main-body-side electrical connector being detachable from the display-side electrical connector,
a circuit board supporting the main-body-side electrical connector,
a switch on the circuit board, configured to switch the main-body-side electrical connector between an energizing state and a de-energizing state, and
a blind cover to be attached to a connection part connecting the main-body-side electrical connector with the display-side electrical connector to cover the connection part, and
the blind cover has a projection configured to press the switch to switch the main-body-side electrical connector from the de-energizing state to the energizing state when the blind cover is attached to the connection part to cover the connection part.

2. The on-vehicle device according to claim 1, wherein
the display includes
a display-side circuit board supporting the display-side electrical connector,
a display-side circuit board cover covering the display-side circuit board, a metal plate disposed to be opposite to the display-side circuit board cover with the display-side circuit board being between the metal plate and the display-side circuit board cover, and
a screw fixing the display-side circuit board cover to the metal plate, and a gap is formed between the display-side circuit board and the display-side circuit board cover in an axial direction of the screw.

3. The on-vehicle device according to claim 2, wherein a gap is formed between the display-side circuit board and the display-side circuit board cover in a direction vertical to the axial direction.

4. The on-vehicle device according to claim 2 or 3, wherein
the main body includes a circuit board cover covering the circuit board, the circuit board cover has a guide guiding the projection, and
the switch is positioned at a distal end of the guide.

5. The on-vehicle device according to any one of claims 1 to 4, wherein the projection has a rib extending in a projecting direction of the projection.

6. A display attachment device from which a display is detachable, comprising
a main body configured to be housed in a storage box of a console panel in a vehicle, wherein
the display includes a display-side electrical connector having a plurality of connection terminals,
the main body includes
a main-body-side electrical connector to be projected from a front surface of the main body, the main-body-side electrical connector being detachable from the display-side electrical connector,
a circuit board supporting the main-body-side electrical connector,
a switch on the circuit board, configured to switch the main-body-side electrical connector between an energizing state and a de-energizing state, and
a blind cover to be attached to a connection part connecting the main-body-side electrical connector with the display-side electrical connector to cover the connection part, and
the blind cover has a projection configured to press the switch to switch the main-body-side electrical connector from the de-energizing state to the energizing state when the blind cover is attached to the connection part to cover the connection part.
